# EUROPÄISCHE PATENTSCHRIFT

(11) **EP 3 036 822 B1**
(45) Veröffentlichungstag und Bekanntmachung des Hinweises auf die Patenterteilung: **15.07.2020**
(21) Anmeldenummer: 14744451.7
(22) Anmeldetag: 05.06.2014
(51) Int. Cl.: H02K 15/095, H02K 1/14

(54) **STATORKERN FÜR EINEN ELEKTRONISCH KOMMUTIERTEN GLEICHSTROMMOTOR UND VERFAHREN ZUR HERSTELLUNG EINES STATORS**
STATOR CORE FOR AN ELECTRONICALLY COMMUTATED DIRECT-CURRENT MOTOR AND METHOD FOR PRODUCING A STATOR
NOYAU DE STATOR POUR MOTEUR À COURANT CONTINU COMMUTÉ ÉLECTRONIQUEMENT ET PROCÉDÉ PERMETTANT DE PRODUIRE UN STATOR

(30) Priorität: 21.08.2013 DE 102013216576
(43) Veröffentlichungstag der Anmeldung: 29.06.2016
(73) Patentinhaber: Bühler Motor GmbH, 90459 Nürnberg (DE)
(72) Erfinder: WEISKE, Klaus, 90571 Schwaig (DE)
(86) Internationale Anmeldenummer: PCT/DE2014/200247
(87) Internationale Veröffentlichungsnummer: WO 2015/024563

(56) Entgegenhaltungen:
- DE-A1-102010 043 976
- JP-A- 2005 176 431
- JP-A- 2007 267 585
- US-A1- 2012 126 659

## Beschreibung

Die Erfindung betrifft einen Statorkern (1) für einen elektronisch kommutierten Gleichstrommotor mit Innenrotor, mit mehreren radial nach innen gerichteten Polkernen (2) welche an ihrer Peripherie mit Rückschlusssegmenten (3) einstückig sind und die Rückschlusssegmente (3) über Stege (4) mit benachbarten Rückschlusssegmenten (3) einstückig sind, wobei die Rückschlusssegmente (3) mit den Stegen (4) abwechseln und gemeinsam einen nahtlosen in sich geschlossenen einstückigen Ring bilden.

Aus der DE 10 2010 043 976 A1 ist ein gattungsgemäßer Statorkern bekannt, bei dem die Rückschlusssegmente über Stauchungsbereiche miteinander verbunden sind, die zwischen den einander gegenüberliegenden Rückschlusssegmenten innerhalb eines von diesen beschriebenen äußeren Kreises angeordnet sind. Durch die beschriebene Anordnung soll ein Statorkern bereitgestellt werden, dessen Pole, insbesondere Polschuhe einen vergrößerten Abstand voneinander besitzen. Der vergrößerte Abstand dient zur einfacheren Bewicklung der Pole durch ein Nadelwickelverfahren und zu einer Erhöhung der Windungszahl der Statorwicklung und damit einer Erhöhung des erreichbaren Drehmoments. Durch die Verwendung von Stauchungsbereichen sind erhebliche Kräfte notwendig, um den Statorkern nach der Bewicklung in eine durchmesserreduzierten Form zu bringen und um die vergrößerten Abstände der Pole und der Polschuhe zu verkleinern. Der Hohe Kraftaufwand kann zu Beschädigungen des Statorkerns führen. Bei Verwendung eines Statorblechpakets könnten beispielsweise durch mechanische Verformung Strombrücken entstehen, welche die Entstehung von Wirbelströmen begünstigen und damit Wirkungsgradverlusten zur Folge hätten. Ein weiterer Nachteil besteht darin, dass die Rückschlusssegmente beim Pressvorgang gut geführt werden müssen um eine definierte reproduzierbare Endgeometrie zu erhalten.

Die nächstliegende US 2012/126659 A1 offenbart einen Statorkern für einen elektronisch kommutierten Gleichstrommotor mit Innenrotor, mit mehreren radial nach innen gerichteten Polkernen welche an ihrer Peripherie mit Rückschlusssegmenten und die Rückschlusssegmente über Stege mit benachbarten Rückschlusssegmenten einstückig sind, wobei die Rückschlusssegmente mit den Stegen abwechseln und gemeinsam einen nahtlosen in sich geschlossenen einstückigen Ring bilden.

Aufgabe der vorliegenden Erfindung ist es daher bei einem gattungsgemäßen Statorkern dafür Sorge zu tragen, dass bei einer Verringerung des Statordurchmessers und Verringerung der Polabstände nach einer Bewicklung eine eindeutig definierte Endlage der aneinandergrenzenden Bereiche eingenommen werden kann, dass für diesen Prozessschritt nur geringe Kräfte notwendig sind, bei denen nicht mit einer Beschädigung des Statorkerns zu rechnen ist und dass am Ende des Prozesses nur ein sehr kleiner und gleichmäßiger Luftspalt verbleibt bei einer geringstmöglichen Rückfederung.

Diese Aufgabe wird durch das Kennzeichen des Anspruchs 1 und durch die Verfahrensschritte des Anspruchs 7 gelöst.

Da die Stege (4) im Wesentlichen außerhalb eines von den Rückschlusssegmenten (3) beschriebenen äußeren Kreises angeordnet sind und eine mittlere Sollbiegelinie (5c) zwischen zwei dreieckförmigen Bereichen (6) des Stegs (4) angeordnet ist, wird eine Verringerung des Statorkerndurchmessers nicht durch Stauchen sondern durch Biegen erreicht. Dabei sind die Hebelverhältnisse günstig und die Biegekräfte gering. Durch die geringen Biegekräfte kann es nicht zu nennenswerten mechanischen Beschädigungen des Statorkerns kommen. Die dreieckförmigen Bereiche bilden in einem Endmontagezustand Flussbrücken und damit Teile des magnetischen Rückschlussrings.

Um die Biegekräfte gering zu halten, weisen die Stege (4) drei Sollbiegelinien (5) auf, an denen sie wesentlich dünner ausgebildet sind als in Bereichen zwischen den Sollbiegelinien (5). Weiter ermöglicht diese Geometrie eine Art Faltung der Stege.

Weiterbildungen der Erfindung werden in den Unteransprüchen dargestellt. Zwei äußere Sollbiegelinien (5a, 5b) sind an Übergängen zwischen Rückschlusssegmenten (3) und Stegen (4) angeordnet. Die Sollbiegelinien fördern eine definierte und reproduzierbare Umformung des Statorkerns. Der Abstand zwischen der mittleren Sollbiegelinie (5c) und den beiden äußeren Sollbiegelinien (5a, 5b) ist gleich groß und geringfügig größer als die Dicke der Rückschlussegmente (3) in radialer Richtung. Diese Dimensionierung beruht darauf, dass die tangentialen Seitenflächen der Rückschlusssegmente nicht radial verlaufen, sondern unter einem Winkel zur radialen Richtung, wodurch die Seitenflächen geringfügig größer sind als radial verlaufende Seitenflächen. Die Abstände der Sollbiegelinien (5a, 5b) zur Mittleren Sollbiegelinie (5c) stimmen mit der Länge der Seitenflächen überein. Damit ist im Endmontagezustand ein stufenfreier Übergang zwischen den einzelnen Rückschlusssegmenten gegeben.

Die Polkerne (2) weisen Polschuhe (7) auf, deren Abstand zu benachbarten Polschuhen (7) größer ist als der geringste Abstand zwischen benachbarten Rückschlusssegmenten (3). Dadurch ist sichergestellt, dass auch im Endmontagezustand ein Abstand zwischen den einander gegenüberliegenden Polschuhen vorhanden ist. Der vergrößerte Abstand zwischen den Polschuhen dient in erster Linie als Bewegungsraum für eine Wickelnadel und zur Bewicklung der Pole.

Die zweite Lösung der Aufgabe besteht durch die Verfahrensschritte a) Bewickeln der Polkerne mit einem Wicklungsdraht und b) Biegen der Stege (4) nach innen durch unmittelbare Kraftbeaufschlagung der Stege (4)); c) Dreieckförmige Bereiche (6) schwenken beim Biegen um Sollbiegelinien (5a bzw. 5b) und ihre äußeren Spitzen bewegen sich aufeinander zu; d) Nach dem Biegen hat sich ein Abstand a zwischen den Enden der Rückschlusssegmente (3) auf Null verringert; die Sollbiegelinie (5c) berührt jetzt die Enden der Rückschlusssegmente (3) und der magnetische Rückschluss ist von Rückschlusssegment (3) zu Rückschlusssegment (3) über die dreieckförmigen Bereiche (6) der Stege (4) geschlossen. Die Bewicklung des Statorkerns erfolgt durch Nadelwickeln oder vergleichbare Verfahren mit denen ein geschlossener Statorkern von innen bewickelbar ist. Durch die unmittelbare Kraftbeaufschlagung der Stege werden günstige Hebelarme wirksam und erleichtern die Biegung der Stege mit geringer Kraftwirkung.

Nachfolgend wird die Erfindung anhand von Ausführungsbeispielen näher erläutert. Es zeigen:
- Fig. 1: einen herkömmlichen von innen bewickelter Statorkern,
- Fig. 2: einen erfindungsgemäßen von innen bewickelten Statorkern,
- Fig. 3: eine vergrößerte Ansicht eines Stegs vor dem Biegen,
- Fig. 4: eine vergrößerte Ansicht des Stegs nach dem Biegen und
- Fig. 5: den erfindungsgemäßen von innen bewickelten Statorkern nach dem Biegen.

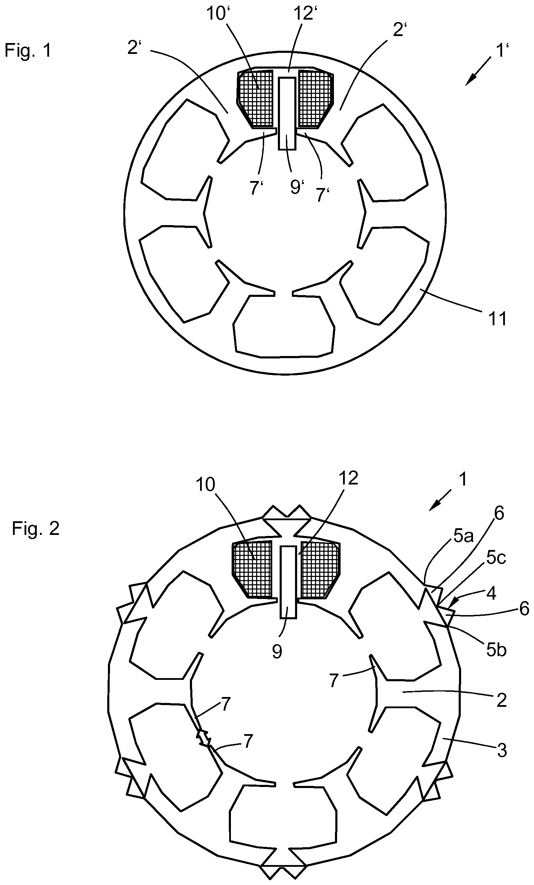

Fig. 1 zeigt einen herkömmlichen von innen bewickelten Statorkern 1', mit mehreren Polen 2', die Polschuhe 7' aufweisen, einer Wicklung 10', wobei hier nur eine Teilwicklung in einer Nut 12' angedeutet ist. Die Enden zweier einander gegenüberliegender Polschuhe 7' müssen einen ausreichenden Abstand voneinander aufweisen, damit genügend Raum zum Führen einer Wickelnadel 9' vorhanden ist. Aufgrund der geometrischen Gegebenheiten lassen sich mit dem herkömmlichen Statorkern keine optimalen Windungszahlen erreichen.

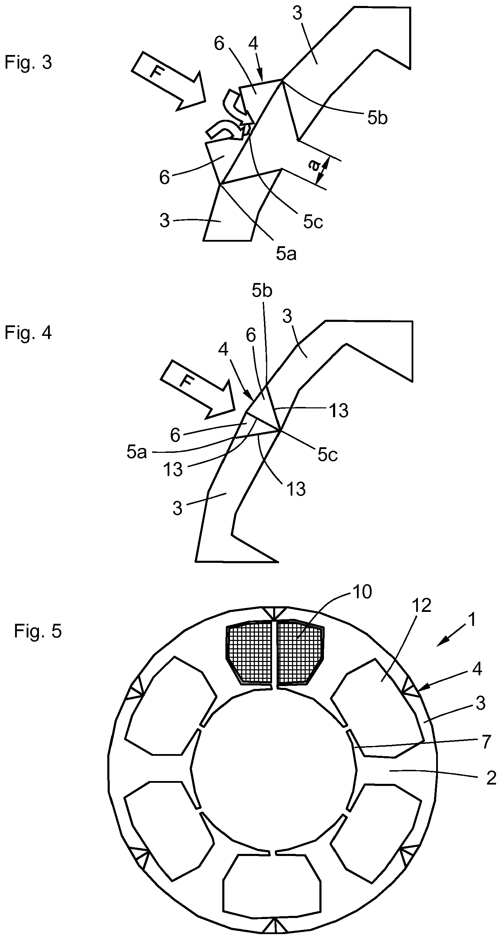

Demgegenüber zeigt Fig. 2 einen erfindungsgemäßen von innen bewickelten Statorkern 1, mit mehreren nach innen weisenden Polen 2, welche an ihrem inneren Ende Polschuhe 7 und an ihrem äußeren Ende Rückschlusssegmente 3 aufweisen. Wie durch einen Abstandspfeil verdeutlicht, sind die Abstände der Polschuhe 7 gegenüber Fig. 5 vergrößert, sie sind aber etwa so groß wie bei dem herkömmlichen Statorkern aus Fig. 1, da der Polschuhabstand die gleiche Mindestgrösse für die Einführung der Wickelnadel aufweisen müssen. Einander gegenüberliegende Rückschlussegmente 3 werden durch jeweils einen Steg 4 überbrückt. Eine Mehrzahl von Polen 2, Rückschlusssegmenten 3 und Stegen 4 bilden den einstückigen Statorkern 1. Im vorliegenden Beispiel ist der Statorkern als Statorblechpaket ausgeführt. Das Statorblechpaket ist vorzugsweise durch Stanzpaketieren hergestellt. Die einzelnen Bleche des Statoblechpakets sind daher miteinander verbunden. Die Stege 4 sind mit den Rückschlusssegmenten 3 über Sollbiegelinien 5a und 5b verbunden. Innerhalb der Stege 4 ist eine mittlere Sollbiegelinie 5c vorgesehen. Zwischen den Sollbiegelinien 5a und 5c bzw. 5b und 5c bilden dreieckförmige Bereiche 6 die Stege 4. Die Sollbiegelinien 5a, 5b, 5c sind Engstellen des Stegs 4. Die Querschnittsfläche dieser Engstellen ist so bemessen, dass einerseits eine ausreichende Festigkeit für den Wickelvorgang und für die Handhabung gegeben ist und andererseits die Biegekräfte nicht zu groß werden.

Fig. 3 zeigt eine vergrößerte Ansicht eines Stegs 4 vor dem Biegen. Die Enden der Rückschlusssegmente 3 haben zueinander einen minimalen Abstand a. Durch eine radial durch einen Biegestempel ausgeübte Kraft F auf die dreieckförmigen Bereiche 6 des Stegs bewirkt ein Biegen des Stegs 4 in der Sollbiegelinie 5c und ein Biegen der dreieckförmigen Bereiche 6 in den Sollbiegelinien 5a, 5b gegenüber dem Rückschlusssegment 3. Die dreieckförmigen Bereiche 6 schwenken dabei um die Sollbiegelinien 5a bzw. 5b und ihre äußeren Spitzen bewegen sich aufeinander zu.

In Fig. 4 ist eine vergrößerte Ansicht des Stegs nach dem Biegen dargestellt. Der Abstand a (Fig. 3) zwischen den Enden der Rückschlusssegmente 3 hat sich auf Null verringert. Die Sollbiegelinie 5c berührt jetzt die Enden der Rückschlusssegmente. Der magnetische Rückschluss ist von Rückschlusssegment 3 zu Rückschlusssegment 3 über die dreieckigen Bereiche 6 der Stege 4 geschlossen. Da die Biegebereiche auf die Sollbiegelinien 5a, 5b, 5c beschränkt bleiben, verformen sich die Stege in den Berührungsflächen 13 mit dem Rückschlussegementen 3 und in den Berührungsflächen 13 mit sich selbst nicht. Die Rückfederungskräfte sind gering.

Fig. 5 zeigt den erfindungsgemäßen von innen bewickelten Statorkern 1 nach dem Biegen, mit den Polen 2, den Rückschlussegmenten 3, den Stegen 4, den Polschuhen 7 und der Wicklung 10. Der Außendurchmesser des Statorkerns hat sich gegenüber dem Außendurchmesser des Statorkerns aus Fig. 2 verringert, gleiches gilt für die Nutbreite und den Abstand der einander gegenüberstehenden Polschuhe 7 und der gegenüberliegenden Rückschlusssegmente. Die Wicklung 10 ist nur symbolisch angedeutet. Im gezeigten Beispiel sind alle Pole 2 mit einer Wicklung 10 versehen.

Bei dem dargestellten Statorkern handelt es sich lediglich um ein Ausführungsbeispiel. Für den Fachmann ist klar, dass zwischen Wicklung und Statorkern eine Isolierung vorgesehen werden muss oder dass die Wicklungsdrähte in sich isoliert sein müssen. Hierzu sind eine Vielzahl von Ausführungen möglich, die hier nicht näher beschrieben werden. Bei Verwendung von Isolierendkappen, die geometrisch an die Pole angepasst sind und auf diese aufgeschoben werden ist darauf zu achten, dass diese im Bereich zwischen den Polen so beweglich gestaltet sind, dass sie die Umformung durch das Biegen der Stege ausgleichen können. Hierzu können die Isolierendkappen ähnlich gestaltet sein, wie der Statorkern, oder beispielsweise Ausgleichsverbindungen in Z-Form aufweisen. Die Stege können sich nach der Umformung auch zu einer Schlaufe verformen. Grundsätzlich besteht hier eine große Designfreiheit.

### Bezugszeichenliste

- 1, 1': Statorkern
- 2, 2': Polkern
- 3: Rückschlusssegment
- 4: Steg
- 5a: äußere Sollbiegelinie
- 5b: äußere Sollbiegelinie
- 5c: mittlere Sollbiegelinie
- 6: dreieckförmiger Bereich
- 7, 7': Polschuh
- 8: Stator
- 9, 9': Wickelnadel
- 10, 10': Wicklung
- 11: Rückschlussring
- 12, 12': Nut
- 13: Kontaktflächen

## Patentansprüche

1. Statorkern (1) für einen elektronisch kommutierten Gleichstrommotor mit Innenrotor, mit mehreren radial nach innen gerichteten Polkernen (2) welche an ihrer Peripherie mit Rückschlusssegmenten (3) einstückig sind und die Rückschlusssegmente (3) über Stege (4), die drei Sollbiegelinien (5a, 5b, 5 c) aufweisen, an denen sie wesentlich dünner ausgebildet sind als in Bereichen zwischen den Sollbiegelinien (5), mit benachbarten Rückschlusssegmenten (3) einstückig sind, wobei die Rückschlusssegmente (3) mit den Stegen (4) abwechseln und gemeinsam einen nahtlosen in sich geschlossenen einstückigen Ring bilden, wobei zwei äußere Sollbiegelinien (5a, 5b) an Übergängen zwischen Rückschlusssegmenten (3) und Stegen (4) angeordnet sind, **dadurch gekennzeichnet, dass** die Stege (4) im Wesentlichen außerhalb eines von den Rückschlusssegmenten (3) beschriebenen äußeren Kreises angeordnet sind und dass eine mittlere Sollbiegelinie (5c) zwischen zwei dreieckförmigen Bereichen (6) des Stegs (4) angeordnet ist, dass die dreieckförmigen Bereiche (6) beim Biegen um die zwei äußeren Sollbiegelinien (5a bzw. 5b) schwenken und ihre äußeren Spitzen sich aufeinander zubewegen und dass sich ein Abstand a zwischen den Enden der Rückschlusssegmente (3) nach dem Biegen auf Null verringert, und dass die mittlere Sollbiegelinie (5c) nach dem Biegen die Enden der Rückschlusssegmente (3) berührt und der magnetische Rückschluss von Rückschlusssegment (3) zu Rückschlusssegment (3) über die dreieckigen Bereiche (6) der Stege (4) geschossen ist.

2. Statorkern nach Anspruch 1, **dadurch gekennzeichnet, dass** der Abstand zwischen der mittleren Sollbiegelinie (5c) und den beiden äußeren Sollbiegelinien (5a, 5b) gleich groß ist und geringfügig größer als die Dicke der Rückschlussegmente (3) in radialer Richtung.

3. Statorkern nach zumindest einem der vorangehenden Ansprüche, **dadurch gekennzeichnet, dass** die Polkerne (2) Polschuhe (7) aufweisen, deren Abstand zu benachbarten Polschuhen (7) größer ist als der geringste Abstand zwischen benachbarten Rückschlusssegmenten (3).

4. Verfahren zur Herstellung eines Stators (8) mit einem Statorkern (1) für einen elektronisch kommutierten Gleichstrommotor mit Innenrotor, mit mehreren radial nach innen gerichteten Polkernen (2) welche an ihrer Peripherie mit Rückschlusssegmenten (3) einstückig sind und die Rückschlusssegmente (3) über Stege (4)), die drei Sollbiegelinien (5a, 5b, 5 c) aufweisen, an denen sie wesentlich dünner ausgebildet sind als in Bereichen zwischen den Sollbiegelinien (5), mit benachbarten Rückschlusssegmenten (3) einstückig sind, wobei die Rückschlusssegmente (3) mit den Stegen (4) abwechseln und gemeinsam einen nahtlosen in sich geschlossenen einstückigen Ring bilden, wobei zwei äußere Sollbiegelinien (5a, 5b) an Übergängen zwischen Rückschlusssegmenten (3) und Stegen (4) angeordnet sind, wobei die dreieckförmigen Bereiche (6) beim Biegen um die zwei äußeren Sollbiegelinien (5a bzw. 5b) schwenken und ihre äußeren Spitzen sich aufeinander zubewegen und wobei sich ein Abstand a zwischen den Enden der Rückschlusssegmente (3) nach dem Biegen auf Null verringert, und wobei die mittlere Sollbiegelinie (5c) nach dem Biegen die Enden der Rückschlusssegmente 3 berührt und der magnetische Rückschluss von Rückschlusssegment (3) zu Rückschlusssegment (3) über die dreieckigen Bereiche (6) der Stege (4) geschossen ist, **gekennzeichnet durch** folgende Verfahrensschritte: a) Bewickeln der Polkerne mit einem Wicklungsdraht; b) Biegen der Stege (4) nach innen durch unmittelbare Kraftbeaufschlagung der Stege (4); c) Dreieckförmige Bereiche (6) schwenken beim Biegen um die zwei äußeren Sollbiegelinien (5a bzw. 5b) und ihre äußeren Spitzen bewegen sich aufeinander zu; d) Nach dem Biegen hat sich ein Abstand a zwischen den Enden der Rückschlusssegmente (3) auf Null verringert; die mittlere Sollbeigelinie (5c) berührt jetzt die Enden der Rückschlusssegmente (3) und der magnetische Rückschluss ist von Rückschlusssegment (3) zu Rückschlusssegment (3) über die dreieckförmigen Bereiche (6) der Stege (4) geschlossen.

## Claims

1. A stator core (1) for an electronically commutated direct-current motor with inner rotor, having a plurality of radially-inwards-directed pole bodies (2) which at their periphery are in one piece with yoke segments (3) and the yoke segments (3) are in one piece with adjacent yoke segments (3) via webs (4) with three predetermined bending lines (5a, 5b, 5c) at which they are substantially thinner than in regions between the predetermined bending lines (5), wherein the yoke segments (3) alternate with the webs (4) and together form a seamless, one-piece ring closed in itself, wherein two outer predetermined bending lines (5a, 5b) are arranged at transitions between yoke segments (3) and webs (4), **characterized in that** the webs (4) are arranged substantially exterior to an outer circle described by the yoke segments (3) and **in that** a middle predetermined bending line (5c) is arranged between two triangular regions (6) of the web (4), **in that** the triangular regions (6) pivot about the two outer predetermined bending lines (5a and 5b respectively) upon bending and their outer apexes move towards one another and **in that** a spacing a between the ends of the yoke segments (3) reduces to zero after the bending, and **in that** the middle predetermined bending line (5c) contacts the ends of the yoke segments (3) after the bending and the magnetic yoke is closed from yoke segment (3) to yoke segment (3) via the triangular regions (6) of the webs (4).

2. A stator core according to claim 1,
**characterized in that** the spacing between the middle predetermined bending line (5c) and the two outer predetermined bending lines (5a, 5b) is the same and slightly greater than the thickness of the yoke segments (3) in a radial direction.

3. A stator core according to at least one of the preceding claims, **characterized in that** the pole bodies (2) have pole shoes (7) whose spacing from adjacent pole shoes (7) is greater than the smallest distance between adjacent yoke segments (3).

4. A method of manufacturing a stator (8) with a stator core (1) for an electronically commutated direct-current motor with inner rotor, having a plurality of radially-inwards-directed pole bodies (2) which at their periphery are in one piece with yoke segments (3) and the yoke segments (3) are in one piece with adjacent yoke segments (3) via webs (4) with three predetermined bending lines (5a, 5b, 5c) at which they are substantially thinner than in regions between the predetermined bending lines (5), wherein the yoke segments (3) alternate with the webs (4) and together form a seamless, one-piece ring closed in itself, wherein two outer predetermined bending lines (5a, 5b) are arranged at transitions between yoke segments (3) and webs (4), wherein the triangular regions (6) pivot about the two outer predetermined bending lines (5a and 5b respectively) upon bending and their outer apexes move towards one another and wherein a spacing a between the ends of the yoke segments (3) reduces to zero after the bending, and wherein the middle predetermined bending line (5c) contacts the ends of the yoke segments (3) after the bending and the magnetic yoke is closed from yoke segment (3) to yoke segment (3) via the triangular regions (6) of the webs (4), **characterized by** the following method steps: a) winding of the pole bodies with a winding wire; b) bending of the webs (4) inwards by direct action of force on the webs (4); c) triangular regions (6) pivot about the two outer predetermined bending lines (5a and 5b respectively) upon bending and their outer apexes move towards one another; d) after the bending there has been a reduction to zero in a distance a between the ends of the yoke segments (3); the middle predetermined bending line (5c) now contacts the ends of the yoke segments (3) and the magnetic yoke is closed from yoke segment (3) to yoke segment (3) via the triangular regions (6) of the webs (4).

## Revendications

1. Noyau statorique (1) pour un moteur à courant continu à commutation électronique à rotor intérieur, avec plusieurs noyaux polaires (2) dirigés radialement vers l'intérieur, lesquels forment une seule pièce avec des segments de dérivation (3) au niveau de leur périphérie et les segments de dérivation (3) forment une seule pièce avec des segments de dérivation (3) voisins par l'intermédiaire d'éléments jointifs (4), qui présentent trois lignes destinées au fléchissement (5a, 5b, 5c), au niveau desquelles ils sont réalisés de manière sensiblement plus mince que dans les zones entre les lignes destinées au fléchissement (5), dans lequel les segments de dérivation (3) alternent avec les éléments jointifs (4) et forment conjointement une bague sans soudure monobloc fermée sur elle-même, dans lequel deux lignes destinées au fléchissement (5a, 5b) extérieures sont disposées au niveau de transitions entre des segments de dérivation (3) et des éléments jointifs (4),
**caractérisé en ce que** les éléments jointifs (4) sont disposés sensiblement à l'extérieur d'un cercle extérieur décrit par les segments de dérivation (3) et qu'une ligne destinée au fléchissement centrale (5c) est disposée entre deux zones triangulaires (6) de l'élément jointif (4), que les zones triangulaires (6), lors du fléchissement, pivotent autour des deux lignes destinées au fléchissement extérieures (5a et/ou 5b) et leurs pointes extérieures avancent l'une vers l'autre et qu'un écart a entre les extrémités des segments de dérivation (3) se réduit à zéro après le fléchissement, et que la ligne destinée au fléchissement centrale (5c), après le fléchissement, touche les extrémités des segments de dérivation (3), et la dérivation magnétique de segment de dérivation (3) à segment de dérivation (3) est tirée par l'intermédiaire des zones triangulaires (6) des éléments jointifs (4).

2. Noyau statorique selon la revendication 1,
**caractérisé en ce que** l'écart entre la ligne destinée au fléchissement centrale (5c) et les deux lignes destinées au fléchissement extérieures (5a, 5b) est de même grandeur et légèrement plus grand que l'épaisseur des segments de dérivation (3) dans la direction radiale.

3. Noyau statorique selon au moins l'une des revendications précédentes, **caractérisé en ce que** les noyaux polaires (2) présentent des épanouissements polaires (7), dont l'écart par rapport à des épanouissements polaires (7) voisins est plus grand que l'écart le plus petit entre des segments de dérivation (3) voisins.

4. Procédé de fabrication d'un stator (8) avec un noyau statorique (1) pour un moteur à courant continu à commutation électronique à rotor intérieur, avec plusieurs noyaux polaires (2) dirigés radialement vers l'intérieur, lesquels forment une seule pièce avec des segments de dérivation (3) au niveau de leur périphérie et les segments de dérivation (3) forment une seule pièce avec des segments de dérivation (3) voisins par l'intermédiaire d'éléments jointifs (4), qui présentent trois lignes destinées au fléchissement (5a, 5b, 5c), au niveau desquelles ils sont réalisés de manière sensiblement plus mince que dans les zones entre les lignes destinées au fléchissement (5), dans lequel les segments de dérivation (3) alternent avec les éléments jointifs (4) et forment conjointement une bague sans soudure monobloc fermée sur elle-même, dans lequel deux lignes destinées au fléchissement extérieures (5a, 5b) sont disposées au niveau de transitions entre des segments de dérivation (3) et des éléments jointifs (4),
dans lequel les zones triangulaires (6), lors du fléchissement, pivotent autour des deux lignes destinées au fléchissement extérieures (5a et/ou 5b) et leurs pointes extérieures avancent l'une vers l'autre et dans lequel un écart a entre les extrémités des segments de dérivation (3) se réduit à zéro après le fléchissement, et dans lequel la ligne destinée au fléchissement centrale (5c), après le fléchissement, touche les extrémités des segments de dérivation (3), et la dérivation magnétique de segment de dérivation (3) à segment de dérivation (3) est tirée par l'intermédiaire des zones triangulaires (6) des éléments jointifs (4), **caractérisé par** les étapes de procédé suivantes : a) l'enroulement des noyaux polaires avec un fil d'enroulement ; b) le fléchissement des éléments jointifs (4) vers l'intérieur par soumission directe des éléments jointifs (4) à l'effet d'une force ; c) les zones triangulaires (6) pivotent lors du fléchissement autour des deux lignes destinées au fléchissement extérieures (5a et/ou 5b) et leurs pointes extérieures avancent l'une vers l'autre ; d) après le fléchissement, un écart a entre les extrémités des segments de dérivation (3) se réduit à zéro ; la ligne destinée au fléchissement centrale (5c) touche à présent les extrémités des segments de dérivation (3) et la dérivation magnétique est fermée de segment de dérivation (3) à segment de dérivation (3) par l'intermédiaire des zones triangulaires (6) des éléments jointifs (4).
